## Europäisches Patentamt
## European Patent Office
## Office européen des brevets

(19)

(11) Veröffentlichungsnummer: **0 167 749**
**B1**

(12)

# EUROPÄISCHE PATENTSCHRIFT

(45) Veröffentlichungstag der Patentschrift:
**06.04.88**

(51) Int. Cl.⁴: **H 02 K 9/22, H 02 K 7/14**

(21) Anmeldenummer: **85105741.4**

(22) Anmeldetag: **10.05.85**

(54) **Aussenläufermotor mit angeschraubtem Motorflansch.**

(30) Priorität: **19.06.84 DE 3422743**

(43) Veröffentlichungstag der Anmeldung:
**15.01.86 Patentblatt 86/3**

(45) Bekanntmachung des Hinweises auf die Patenterteilung:
**06.04.88 Patentblatt 88/14**

(84) Benannte Vertragsstaaten:
**CH DE FR GB IT LI**

(56) Entgegenhaltungen:
**DE-A-2 535 609**
**FR-A-1 197 706**
**FR-A-2 256 573**
**FR-A-2 371 591**
**FR-A-2 489 620**
**GB-A-726 469**
**LU-A-71 477**
**US-A-2 706 260**

**PATENTS ABSTRACTS OF JAPAN, Band 6, Nr. 111
(E-114)(989), 22. Juni 1982; & JP - A - 57 40354
(HITACHI SEISAKUSHO K.K.) 05.03.1982**

(73) Patentinhaber: **ebm Elektrobau Mulfingen GmbH
& Co., D-7119 Mulfingen (DE)**

(72) Erfinder: **Sturm, Gerhard, Gaisbergweg 8, D-7119
Mulfingen (DE)**

(74) Vertreter: **Patentanwälte Dr. Solf & Zapf,
Zeppelinstrasse 53, D-8000 München 80 (DE)**

## Beschreibung

Die Erfindung betrifft einen Außenläufermotor, insbesondere zum Antrieb von Ventilatoren, mit einem fliegend gelagerten Läufer und einem mit einem Motorflansch verbundenen Stator, der aus einer Statorwicklung und einem Statorblechpaket besteht, wobei das Statorblechpaket mit mindestens einer aus Kunststoff bestehenden, isolierenden Schicht versehen ist, die sich zumindest bereichsweise über die Stirnseiten des Statorblechpaketes erstreckt, und wobei der Läufer über eine mittels Lagerelementen drehbar gelagerte, eine axiale Statorbohrung durchsetzende Läuferwelle gelagert ist, die an ihrem dem Motorflansch abgekehrten Ende drehfest mit dem Läufer verbunden ist.

Aus der DE-A-21 36 170 ist es bei einem derartigen Außenläufermotor bekannt, ein Flanschrohr innerhalb der Statorbohrung unterzubringen. Dieses Flanschrohr ist durch Schrauben mit der Grundplatte verschraubt und trägt das aufgepreßte Blechpaket. Innerhalb des Flanschrohres ist die Welle in zwei Lagerbuchsen drehbar gelagert. Bei dieser bekannten Anordnung von Flanschrohr und Lagerbuchsen wird die während des Motorbetriebes in den Wicklungen entstehende Wärme über das Statorblechpaket auf das Flanschrohr übertragen und über dieses auf die Grundplatte abgeführt. Da die Lagerelemente, seien es Gleitlager oder Kugellager, in direktem Kontakt mit dem Flanschrohr stehen, wird die Temperaturerhöhung im Flanschrohr auf die Lagerelemente übertragen. Eine starke Temperaturerhöhung in den Lagerelementen ist allerdings äußerst unerwünscht, da dies zu einer zum Teil wesentlichen Verminderung der Lebensdauer der Lagerung und damit des Motors beiträgt. Außerdem ist bei erhöhter Temperatur der Lagerung ein wärme- bzw. hitzebeständigeres Öl bzw. Fett erforderlich. Dies hat zur Folge, daß der Motor aufgrund der erhöhten Viskosität des Schmierstoffes in kaltem Zustand mehr belastet wird, so daß die gewünschte Drehzahl u.U. erst verzögert erreicht wird.

Eine nicht vorveröffentlichte und daher nicht zum Stand der Technik zählende, deutsche Anmeldung der Anmelderin (DE-A-34 04 466) betrifft einen Außenläufermotor, dessen Statorblechpaket eine mittige Bohrung aufweist, durch die eine Läuferwelle verläuft, die einseitig an einem glockenförmig ausgebildeten Läufer befestigt ist. Zur Lagerung der Läuferwelle sind Lagerelemente vorgesehen, die in im Bereich der Stirnseiten des Statorblechpaketes gelegene Ringkragen eingepreßt sind, von denen einer einstückig am Motorflansch des Außenläufermotors ausgebildet ist. Der Ringkragen besitzt endseitig einen radial nach innen ragenden Ringsteg, der im Bereich einer das Statorblechpaket durchsetzenden Bohrung an einer Stirnseite des Statorblechpaketes anliegt und von einem Außenflansch einer in die Bohrung des Statorblechpaketes eingepreßten Statorbuchse hintergriffen wird, wodurch der Motorflansch an dem Stator gehalten wird. Bei diesem Außenläufermotor ist das auftretende Problem der Wärmeableitung dadurch gelöst, daß die Wärmeableitung über die Lagerelemente dadurch erschwert wird, daß das Statorblechpaket in seiner Innenbohrung mit einer aus Kunststoff bestehenden, angespritzten, elektrisch isolierenden Schicht umgeben ist, die im Bereich der Stirnseiten des Statorblechpaketes in angespritzte Ringkragen übergeht, in denen die Lagerelemente untergebracht sind. Diese isolierende Schicht wirkt als Wärmedämmung, so daß die im Motorbetrieb im Stator entstehenden hohen Temperaturen nicht bzw. nur in sehr beschränktem Maße auf die Lagerelemente einwirken können. Eine Ableitung der im Stator entstehenden Wärme erfolgt weitgehend über den einstückig am Motorflansch ausgebildeten Ringkragen, dessen stirnseitige Fläche an einem isolierstofffreien, in der Nähe der Statorbohrung gelegenen Bereich einer Stirnseite des Statorblechpaketes anliegt. Die Ableitung der Wärme erfolgt so mit über den Ringkragen zum Motorflansch, von dem sie an die Umgebung abgeführt wird. Durch das Anliegen des Ringkragens an dem Statorblechpaket des bekannten Außenläufermotors ist eine gute Wärmeabfuhr gewährleistet, die jedoch insbesondere im Hinblick auf größere elektrische Motorleistungen bei kompaktem Motoraufbau noch wirkungsvoller sein könnte.

Der Erfindung liegt die Aufgabe zugrunde, einen Außenläufermotor der eingangs genannten Art zu schaffen, bei dem durch eine günstigere Wärmeabfuhr eine verringerte Lagertemperatur und damit eine erhöhte Lebensdauer der Lagerung erreicht wird.

Erfindungsgemäß wird dies dadurch erreicht, daß sich die isolierende Schicht auch über die Innenseite der Statorbohrung erstreckt, daß die Lagerelemente an der isolierenden Schicht gehaltert sind, und daß mindestens ein metallisches Wärmeleitelement vorgesehen ist, das einendig kraft- und/oder formschlüssig in das Innere des Statorblechpaketes eingreift und anderendig zur Wärmeableitung an den vorzugsweise metallischen Motorflansch mit diesem in Kontakt steht.

Diese erfindungsgemäße Ausbildung sorgt durch eine besonders günstige Wärmekopplung zwischen dem Statorblechpaket und dem Motorflansch für eine thermische Entlastung der Lagerelemente, da das Wärmeleitelement in das Innere des Statorblechpaketes eingreift und somit großflächigen Kontakt mit diesem erlangt, wodurch ein sehr guter Wärmeübergang erfolgt. Ein so bewirkter Wärmeübergang ist weitaus wirkungsvoller als die bloße Anlage von Teilen des Motorflansches an der Stirnseite des Statorblechpaketes. Die Lagerelemente sind dabei vorteilhafterweise durch die isolierende Schicht thermisch vom abgeleiteten Wärmestrom isoliert. Darüber hinaus tritt bei dem erfindungsgemäßen Außenläufermotor der Vorteil auf, daß das Wärmeleitelement neben seiner Funktion als Wärmeleitbrücke außerdem eine mechanische Verbindung zwischen dem Stator und dem Motorflansch herstellt. Hierdurch erfolgt eine sehr einfache und kostengünstige Befestigung des Motorflansches an dem Stator.

Nach einer Weiterbildung der Erfindung ist vorgesehen, daß das Wärmeleitelement als Gewindeschraube ausgebildet und in eine Gewindebohrung des Statorblechpaketes eingeschraubt ist. Diese Schraubbefestigung ermöglicht eine einfache Montage des erfindungsgemäßen Außenläufermotors, ohne daß hierfür Spezialwerkzeuge erforderlich sind. Ferner wird hierdurch eine leicht lösbare Verbindung zwischen dem Motorflansch und dem Stator erzielt. Die Gewindeschraube wird vorzugsweise möglichst tief in das Statorblechpaket eingeschraubt, um über ihren Schaft eine möglichst wirkungsvolle Wärmeableitung an dem Motorflansch vornehmen zu können.

Nach einer anderen Weiterbildung der Erfindung kann vorgesehen sein, daß die zwischen den Polspitzen zweier gegenüberliegender Statorpole eingesetzten Streubleche des Motors als Wärmeleitelement ausgebildet sind. Hierzu ist das Streublech als Bolzen ausgeführt und axial verlängert, wobei diese Verlängerung mit einem Gewinde versehen ist, das in Bohrungen am Motorflansch eingreift. Das Streublech kann mittels eines am anderen Ende angebrachten Kopfes verdrehsicher am Stator fixiert sein, oder auch mittels einiger Schweißpunkte am Stator gehalten werden.

Nach einer anderen Weiterbildung der Erfindung ist mindestens ein Wärmeleitsteg vorgesehen, der einendig an dem Motorflansch angeordnet ist und anderendig an dem äußeren Randbereich der dem Motorflansch zugewandten Stirnseite des Statorblechpaketes anliegt. Der Wärmeleitsteg kann als koaxial zur Läuferwelle verlaufender Ringsteg ausgebildet sein. Alternativ können auch mehrere fingerartig ausgebildete Wärmeleitstege vorgesehen sein, die um die Statorbohrung herum angeordnet sind. Die Wärmestege bilden zusätzlich zu den Wärmeleitelementen Wärmebrücken zwischen dem Statorblechpaket und dem Motorflansch, wodurch eine besonders wirkungsvolle Wärmeableitung an die Außenluft erfolgt. Vorteilhaft ist, daß die Wärmeleitstege an dem äußeren Randbereich der entsprechenden Stirnseite des Statorblechpaketes anliegen, da sie somit eine Lage an der äußeren Peripherie des erfindungsgemäßen Außenläufermotors einnehmen, wodurch eine Wärmeabgabe an die Außenluft wirkungsvoll vorgenommen werden kann, da die äußeren Bereiche des Außenläufermotors in unmittelbarem Kontakt mit der Außenluft stehen und somit eine gute Wärmeabgabe erfolgen kann. Die Wärmeleitstege werden neben ihrer Funktion als Wärmebrücken außerdem als Abstandhalter verwendet, die den Motorflansch gegenüber dem Statorblechpaket auf Abstand halten, um ausreichend Raum für die Statorwicklung und insbesondere den Wickelkopf zur Verfügung zu haben. Ein weiterer noch hervorzuhebender Vorteil ist, daß durch das Entfallen des herkömmlichen, aus dem Stand der Technik bekannten Lagerträgers ein preisgünstiger, montagefreundlicher Motor hergestellt werden kann.

Vorteilhafte Weiterbildungen der Erfindung sind in den Unteransprüchen gekennzeichnet.

Aus der FR-A-2 489 620 ist ein Innenläufermotor bekannt, bei dem zwar bereits ein metallisches Wärmeleitelement in das Innere des Blechpaketes des Außenstators eingreift und zur Wärmeableitung auf beiden Stirnseiten des Stators mit dem Motorgehäuse in Kontakt steht. Da jedoch die Welle des Innenläufers jeweils endseitig in Lagerbuchsen des Gehäuses gelagert ist, wird die in dem Stator entstehende Wärme über das Wärmeleitelement an das Gehäuse und somit gerade auch in den Bereich der Lager geleitet. Diese Druckschrift kann den Fachmann daher nicht zu der erfindungsgemäßen Ausgestaltung eines Außenläufermotors der gattungsgemäßen Art anregen, bei dem die Lagerelemente durch das Wärmeleitelement in Verbindung mit der isolierenden Schicht tatsächlich thermisch erheblich entlastet werden.

Die Erfindung wird anhand mehrerer, in den bei liegenden Zeichnungen abgebildeter Ausführungsbeispiel näher erläutert. Es zeigen:

Fig. 1 eine Schnittansicht durch einen erfindungsgemäßen Außenläufermotor, wobei im oberen Bereich gemäß einem ersten Ausführungsbeispiel der Erfindung ein Kugellager und im unteren Bereich gemäß einem zweiten Ausführungsbeispiel ein Gleitlager dargestellt sind, und

Fig. 2 ein Ausführungsbeispiel des erfindungsgemäßen Motors, bei dem die Streubleche als Wärmeleitelement ausgebildet sind.

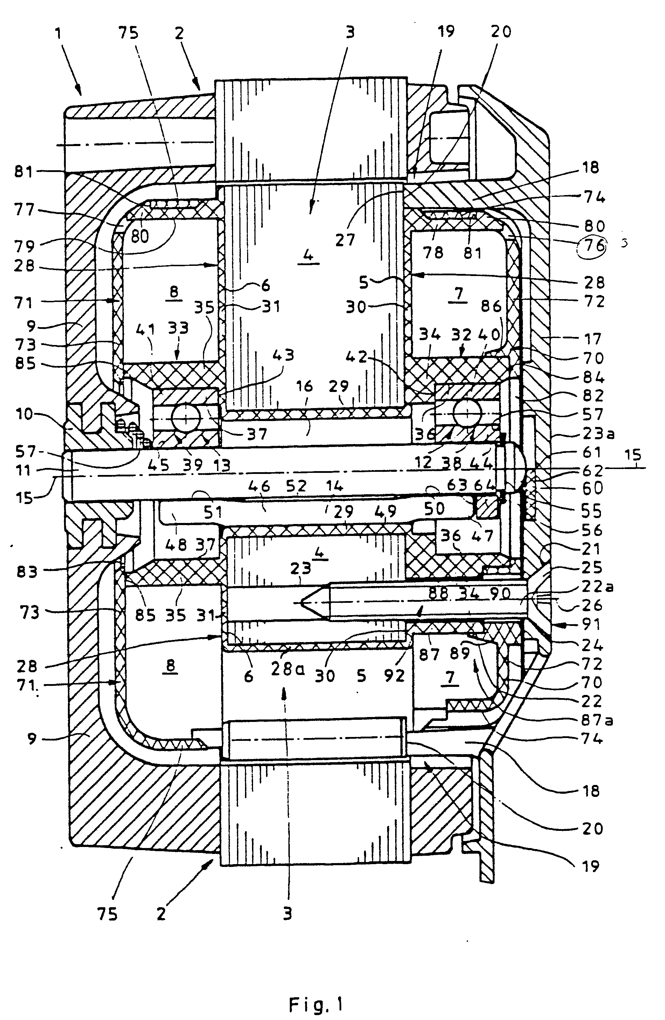

Gemäß der Fig. 1 weist der erfindungsgemäße Außenläufermotor 1 einen Läufer 2 und einen Stator 3 auf, der aus einem Statorblechpaket 4 und einer Statorwicklung besteht, deren Wickelköpfe (nicht dargestellt) in beidseitig der Stirnseiten 5, 6 des Statorblechpakets 4 angrenzenden Wickelräumen 7, 8 angeordnet sind. Der Läufer 2 weist eine Außenläuferglocke 9 auf, die mittels einer Buchse 10 drehfest mit einer Läuferwelle 11 verbunden ist. Die Läuferwelle 11 ist mittels Lagerelementen 12 und 13 bzw. 14 drehbar an dem Stator 3 gelagert, wobei in der Fig. 1 zwei verschiedene Lagerarten des erfindungsgemäßen Außenläufermotors 1 dargestellt sind, und zwar zeigt der oberhalb der Drehachse 15 gelegene Bereich der Fig. 1 ein erstes Ausführungsbeispiel mit Kugellagerung (Lagerelemente 12 und 13) und der unterhalb der Drehachse 15 gelegene Bereich der Fig. 1 ein zweites Ausführungsbeispiel mit Gleitlagerung (Lagerelement 14). Da die beiden Ausführungsbeispiele bis auf die Lagerung identisch aufgebaut sind, gilt der Teil der Beschreibung, der nicht die Lagerung betrifft, für beide Ausführungsbeispiele. Das Statorblechpaket 4 wird axial von einer Statorbohrung 16 durchsetzt, die koaxial von der Läuferwelle 11 durchgriffen wird. An der der Außenläuferglocke 9 gegenüberliegenden Seite des Stators 3 ist ein Motorflansch 17 angeordnet, an dem der erfindungsgemäße Außenläufermotor 1 befestigt werden kann.

Der Motorflansch 17 steht über mindestens ein Wärmeleitelement 22a mit dem Statorblechpaket 4 in Verbindung. Gemäß der Fig. 1 ist das Wärmeleitelement 22a als Gewindeschraube 22 ausgebildet. Der Motorflansch 17 weist einen plattenförmigen Bereich auf, in dem mindestens ein Befestigungsloch 21 angeordnet ist, das von der Gewindeschraube 22 durchgriffen wird, die in eine im Statorblechpaket 4 ausgebildete Gewindebohrung 23 eingeschraubt ist. Vorzugsweise sind mehrere voneinander beabstandet angeordnete Gewindeschrauben 22 vorgesehen, die sowohl der Befestigung des Motorflansches 17 als auch der Wärmeableitung dienen (in der Fig. 1 ist aufgrund der dortigen Schnittführung jedoch nur eine Gewindeschraube 22 dargestellt und dieses auch nur bei dem mit Gleitlagerung versehenen Ausführungsbeispiels; die beschriebene Schraubbefestigung des Motorflansches 17 gilt jedoch auch für das mit einer Kugellagerung versehene Ausführungsbeispiel). Vorzugsweise ist das Befestigungsloch 21 von der Außenseite 23a des Motorflansches 17 her angesenkt (Senkbohrung 24). Die Gewindeschraube 22 besitzt im Falle der Senkbohrung 24 einen Senkkopf 25, so daß die Außenseite 23a des Motorflansches 17 nicht von der Gewindeschraube 22 überragt wird. Der Motorflansch 17 weist ferner mehrere axial verlaufende, voneinander durch Lücken getrennte, fingerartige Wärmeleitstege 18 auf, die vorzugsweise auf einem Kreis angeordnet sind, dessen Mittelpunkt auf der Drehachse 15 der Läuferwelle 11 liegt. Die Wärmeleitstege 18 sind einstückig mit dem Motorflansch 17 ausgebildet und besitzen an ihren freien Enden 19 Stirnflächen 20, die an außen liegenden, peripheren Bereichen 27 der Stirnseite 5 des Statorblechpakets 4 anliegen. Beim Festschrauben des Motorflansches 17 an das Statorblechpaket 4 dienen die Wärmeleitstege 18 als Abstandhalter, so daß zwischen dem Motorflansch 17 und der Stirnseite 5 des Statorblechpakets 4 ausreichend Raum sowohl für die Wickelköpfe der Statorwicklung als auch für die Lagerung des Läufers (Lagerelement 12 bzw. 14) verbleibt. Ferner bilden die Wärmeleitstege 18 beim Festziehen der Gewindeschrauben 22 ein Gegenlager, so daß ein fester Sitz des Motorflansches 17 an dem Stator 3 erreicht wird. Wesentlich ist, daß die Gewindeschrauben 22 und die Wärmeleitstege 18 Wärmebrücken zwischen dem Statorblechpaket 4 und dem Motorflansch 17 bilden, über die die in dem Stator 3 beim Betrieb des erfindungsgemäßen Außenläufermotors 1 entstehende Wärme ohne wesentliche thermische Belastung der Lagerelemente wirkungsvoll nach außen abgeführt wird. Vorzugsweise verlaufen die Längsachsen 26 der Gewindeschrauben 22 parallel zu der Drehachse 15.

Das Statorblechpaket 4 weist eine vorzugsweise aus Kunststoff bestehende, angespritzte, elektrisch isolierende Schicht 28 auf, die sich mit einem Bereich 29 über die Innenseite der Statorbohrung 16 und mit einem Bereich 30 bzw. 31 über die Stirnseiten 5 bzw. 6 des Statorblechpakets 4 erstreckt. Die Bereiche 30 und 31 sind einstückig über Abschnitte 28a der isolierenden Schicht 28 miteinander verbunden, die innerhalb der Statornuten des Statorblechpakets 4 ausgebildet sind (ein derartiger innerhalb einer Statornut gelegener Abschnitt der isolierenden Schicht ist in dem unteren Bereich der Fig. 1 dargestellt). Die isolierende Schicht 28 isoliert das Statorblechpaket 4 gegenüber der Statorwicklung. An den Bereichen 30 und 31 der isolierenden Schicht 28 sind axial verlaufende Lageraufnahmeteile 32 bzw. 33 einstückig ausgebildet, die als koaxial zur Drehachse 15 der Läuferwelle 11 verlaufende Ringkragen 34 bzw. 35 ausgeführt sind. Die Innendurchmesser der Ringkragen 34 und 35 sind größer als der Innendurchmesser der Statorbohrung 16 ausgebildet, so daß die Innenseiten 36 bzw. 37 gegenüber dem Bereich 29 der isolierenden Schicht 28 radial nach außen versetzt verlaufen. Die Ringkragen 34 und 35 dienen der Aufnahme der Lagerelemente 12 bzw. 13, die als Kugellager 38 bzw. 39 ausgebildet sind (s. oberer Teil der Fig. 1). Die Außenringe 40, 41 der Kugellager 38, 39 liegen an den Innenseiten 36 bzw. 37 der Ringkragen 34 bzw. 35 im Klemmsitz an, wobei sich die Stirnseiten 42 bzw. 43 der Außenringe 40 bzw. 41 an den Bereichen 30 bzw. 31 der isolierenden Schicht 28 abstützen. Zusätzlich zu der Klemmbefestigung der Außenringe 40 und 41 kann auch eine Verklebung mit den Ringkragen 34 und 35 vorgesehen sein. Die Innenringe 44 und 45 der Kugellager 38 und 39 umgreifen entsprechende Abschnitte der Läuferwelle 11 kraft- oder formschlüssig. Diese vorteilhafte Anordnung der Kugellager 38 und 39 innerhalb von Ringkragen 34 und 35 der isolierenden Schicht 28 ermöglicht eine Lagerung des Läufers 2 ohne die Verwendung eines Lagerrohres oder dgl. Die Ausbildung der Ringkragen 34 und 35 erfolgt gleichzeitig mit dem Umspritzen des Statorblechpakets 4 mit der isolierenden Schicht 28, so daß die Lageraufnahmeteile 32 und 33 des erfindungsgemäßen Außenläufermotors sehr wirtschaftlich hergestellt werden können. Durch diese isolierende Schicht wird der Übergang der während des Motorbetriebes entstehenden Wärme auf die Lagerelemente wirkungsvoll unterdrückt.

Der untere Teil der Fig. 1 zeigt einen erfindungsgemäßen Außenläufermotor 1 in Gleitlagerausführung, wobei das Lagerelement 14 als eine innerhalb der mit der isolierenden Schicht 29 überzogenen Statorbohrung 16 im Klemmsitz angeordnete Lagerbuchse 46 ausgebildet ist. Die Lagerbuchse 46 besteht aus Sintermaterial und überragt beidseitig mit ihren Endbereichen 47 und 48 die Stirnseiten 5 und 6 des Statorblechpakets 4. Die Außenmantelfläche 49 der Lagerbuchse 46 liegt im Bereich des Statorblechpakets 4 an dem Bereich 29 der isolierenden Schicht 28 an. Auch hier kann zusätzlich zu der Klemmbefestigung ferner eine Verklebung vorgesehen sein. Die Innenfläche der Lagerbuchse 46 bildet innerhalb der Endbereiche 47 und 48 jeweils ein Gleitlager 50 bzw. 51 für die Läuferwelle 11. Der Innendurchmesser der Innenfläche der Lagerbuchse 46 erweitert sich zwischen den Endbereichen 47 und 48 geringfügig, so daß ein schmaler Ringspalt 52 geschaffen wird, der als Schmiermittelreservoir für die Gleitlager 50 und 51 dient. Das Sintermaterial der Lagerbuchse 46 ist vorzugsweise mit Schmiermittel getränkt.

Um bei der Kugellagerausführung des erfindungsgemäßen Außenläufermotors eine axiale Fixierung der Läuferwelle 11 zu erzielen, ist auf der Seite des Motorflansches 17 eine Ringnut 55 an der Läuferwelle 11 ausgebildet, in die ein Sicherungsring 56 eingesetzt ist, der an der Stirnfläche 57 des Innenringes 44 des Kugellagers 38 anliegt. Im Bereich des anderen Endes der Läuferwelle 11 ist eine Kegelfeder 57 angeordnet, die sich einendig an dem Innenring 45 des Kugellagers 39 und anderendig an der dem Stator 3 zugewandten Seite der Buchse 10 abstützt. Die Kegelfeder 57 bewirkt ein axiales Verspannen der Läuferwelle 11 und dient auch der Dämpfung von axialen Schwingungen.

Für die axiale Fixierung der Läuferwelle 11 bei der Gleitlagerausfügung des erfindungsgemäßen Außenläufermotors 1 ist das motorflanschseitige Ende der Läuferwelle 11 mit einer abgerundeten Stirnfläche 60 versehen, welche unter Bildung eines Kugelspurlagers an einer aus hochabriebfestem Kunststoff bestehenden Scheibe 61 anliegt, die in einer Vertiefung 62 des Motorflansches 17 angeordnet ist. Zur Begrenzung des axialen Spiels in der anderen Richtung ist zwischen der Stirnfläche 63 der Lagerbuchse 46 und dem Sicherungsring 56 eine Anlaufscheibe 64 angeordnet. Die Anlaufscheibe 64 dient auch zur Dämpfung von axialen Schwingungen.

Um eine allseitige Isolierung der in den Wickelräumen 7 und 8 angeordneten Wickelköpfe der Statorwicklung zu erzielen, ist auf jeder Seite des Stators 3 eine isolierende Abdeckkappe 70 bzw. 71 angeordnet. Die Abdeckkappen 70 und 71 weisen eine radial verlaufende Wandung 72 bzw. 73 sowie eine axial verlaufende Ringwandung 74 bzw. 75 auf. Im Übergangsbereich von der radial verlaufenden Wandung 72 bzw. 73 in die axial verlaufende Ringwandung 74 bzw. 75 weist jede Abdeckkappe 70 bzw. 71 vereinzelte Öffnungen 76 bzw. 77 auf, in die einstückig mit der isolierenden Schicht 28 ausgebildete, axial verlaufende Rastfinger 78 bzw. 79 eingreifen. Die Rastfinger 78 bzw. 79 sind vorzugsweise an der äußeren Peripherie der Bereiche 30 bzw. 31 der isolierenden Schicht 28 angeordnet. Jeder Rastfinger 78, 79 besitzt eine Rastnase 80 mit einer radial verlaufenden Kante 81, die an dem im Bereich der Ringwandung 74 bzw. 75 befindlichen Rand der Öffnung 76 bzw. 77 anliegt, wodurch die Abdeckkappe 70 bzw. 71 an dem Stator 3 des Außenläufermotors 1 gehaltert wird. Die Abdeckkappen 70 und 71 weisen in ihren radial verlaufenden Wandungen 72 und 73 Durchbrüche 82 und 63 auf. Die Durchbrüche 82 und 83 bilden jeweils einen Durchlaß für die Läuferwelle 11. Die radial verlaufenden Wandungen 72 und 73 der Abdeckkappen 70 und 71 stützen sich im Bereich der Lagerung des erfindungsgemäßen Außenläufermotors 1 axial an den Stirnflächen 84 bzw. 85 der Ringkragen 34 bzw. 35 ab. Zusätzlich kann eine Führungsnase 86 an der Innenseite der Abdeckkappen 70 bzw. 71 angeordnet sein, die an der Außenseite der Ringkragen 34 bzw. 35 anliegt und eine Führung für die Abdeckkappe 70 bzw. 71 bildet (dieses ist in der Fig. 1 bei der Abdeckkappe 70 der Kugellagerausführung des Außenläufermotors dargestellt).

Die Gewindeschraube 22 ist von einer Wärmeisolierhülse 87a umgeben, die eine Wärmeabschirmung der von der Statorwärme erhitzten Gewindeschraube 22 vornimmt, so daß die Wärme nicht von dem Schaft 92 der Gewindeschraube 22 in das Innere des Außenläufermotors 1 gelangen kann, sondern innerhalb der Isolierhülse 87a verbleibt. Die Wärmeisolierhülse 87a besteht aus zwei Abschnitten, nämlich einem Wärmeisolierhülsenabschnitt 67 und einem sich daran anschließenden Wärmeisolierhülsenabschnitt 89. Der Wärmeisolierhülsenabschnitt 87 ist einstückig mit der isolierenden Schicht 28 ausgebildet und wird von einer Bohrung 88 durchsetzt, durch die die Gewindeschraube 22 hindurch verläuft. An den Wärmeisolierhülsenabschnitt 87 schließt sich in Richtung auf den Senkkopf 25 der Gewindeschraube 22 der Wärmeisolierhülsenabschnitt 89 an, der einstückig mit der Abdeckkappe 70 ausgebildet ist und von einer Bohrung 90 durchsetzt wird, durch die die Gewindeschraube 22 verläuft. Neben der Wärmeisolierfunktion dient die Wärmeisolierhülse 87a zur Führung der Gewindeschraube 22 und erleichtert auch ihr Einsetzen in die Gewindebohrung 23 des Statorblechpakets 4.

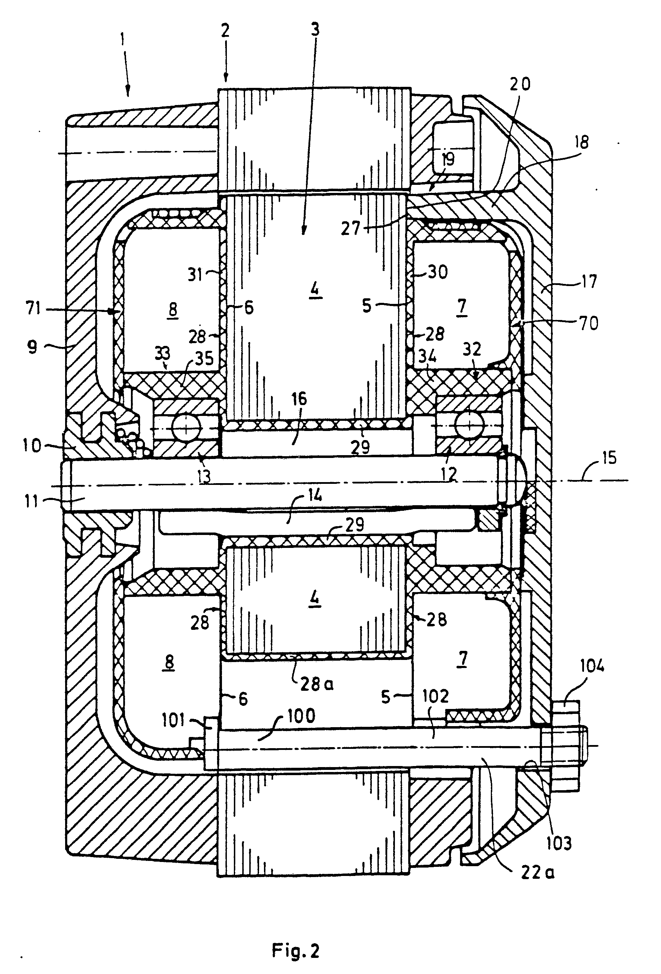

In Fig. 2 ist ein anderes Ausführungsbeispiel zur Wärmeableitung dargestellt, bei dem das Streublech 100 des Außenläufermotors 1 als Wärmeleitelement 22a ausgebildet ist. Hierbei ist zwischen den Polspitzen zweier gegenüberliegender Statorpole des Stators das vorzugsweise bolzenförmige Streublech 100 eingefügt und wird mittels einer Verdrehsicherung 101, die an der Stirnseite 6 des Stators 3 anliegt; gehalten. In axialer Richtung zum Motorflansch 17 hinweisend, ist der verlängerte, das Statorblechpaket 4 überragende Teil 102 des Streublechs 100 in Form einer Gewindeschraube ausgeführt, die in eine entsprechende Bohrung 103 am Motorflansch 17 eingreift. Mit Hilfe einer Mutter 104 erfolgt die Befestigung des Motorflansches 17, wobei sich die Wärmeleitstege 18 des Motorflansches 17 an der Stirnfläche 27 des Statorblechpakets 4 abstützen, wodurch zusätzliche Wärmebrücken zwischen dem Statorblechpaket 4 und dem Motorflansch 17 gebildet werden. Für die Befestigung dieses Wärmeleitelements 22a am Statorblechpaket 4 bieten sich selbstverständlich noch andere in den Zeichnungen nicht dargestellte konstruktive Möglichkeiten an. Eine Möglichkeit besteht darin, das Streublech 100 mittels Punktschweißen am Statorblechpaket zu befestigen, so daß auf die Verdrehsicherung 101 verzichtet werden kann.

Eine weitere Möglichkeit besteht z.B. darin, das Streublech 100 über die Breite des Statorblechpakets 4 als Hohlzylinder auszubilden, der ebenfalls mittels Punktschweißen im Zwischenraum zwischen zwei Polspitzen des Statorblechpakets befestigt ist. In diesen Hohlzylinder greift eine durch die Bohrung 103 des Motorflansches 17 hindurchgeführte Gewindeschraube ein und sorgt sowohl für die Wärmeabfuhr zum Motorflansch als auch für dessen Befestigung.

Der übrige Aufbau des Motors gemäß Fig. 2 entspricht dem nach Fig. 1, so daß weitere bereits dort beschriebene konstruktive Einzelheiten nicht mehr gesondert erwähnt werden und gleiche Teile mit denselben Bezugsziffern versehen sind.

**Patentansprüche**

1. Außenläufermotor (1), insbesondere zum Antrieb von Ventilatoren, mit einem fliegend gelagerten Läufer (2) und einem mit einem Motorflansch (17) verbundenen Stator (3), der aus einer Statorwicklung und einem Statorblechpaket (4) besteht, wobei das Statorblechpaket (4) mit mindestens einer aus Kunststoff bestehenden, isolierenden Schicht (28) versehen ist, die sich zumindest bereichsweise über die Stirnseiten (5, 6) des Statorblechpaketes (4) erstreckt, und wobei der Läufer (2) über eine mittels Lagerelementen (12, 13, 14) drehbar gelagerte, eine axiale Statorbohrung (16) durchsetzende Läuferwelle (11) gelagert ist, die an ihrem dem Motorflansch (17) abgekehrten Ende drehfest mit dem Läufer (2) verbunden ist, dadurch gekennzeichnet, daß sich die isolierende Schicht (28) auch über die Innenseite der Statorbohrung (16) erstreckt, daß die Lagerelemente (12, 13, 14) an der isolierenden Schicht (28) gehalten sind, und daß mindestens ein metallisches Wärmeleitelement (22a) vorgesehen ist, das einendig kraft- und/oder formschlüssig in das Innere des Statorblechpaketes (4) eingreift und anderendig zur Wärmeableitung an den vorzugsweise metallischen Motorflansch (17) mit diesem in Kontakt steht.

2. Außenläufermotor nach Anspruch 1, dadurch gekennzeichnet, daß das Wärmeleitelement (22a) als Gewindeschraube (22) oder Stift bzw. Niet oder dergleichen ausgebildet ist.

3. Außenläufermotor nach Anspruch 2, dadurch gekennzeichnet, daß die Gewindeschraube (22) ein Loch (21) des Motorflansches (17) durchgreift, wobei ihr Kopf (91) an der Außenseite (23a) des Motorflansches (17) anliegt und der Schaft (92) in eine Gewindebohrung (23) des Statorblechpaketes (4) eingeschraubt ist.

4. Außenläufermotor nach Anspruch 2 oder 3, dadurch gekennzeichnet, daß die Gewindeschraube (22) einen Senkkopf (25) aufweist, der in einer Senkbohrung (24) des Motorflansches (17) angeordnet ist.

5. Außenläufermotor nach einem oder mehreren der Ansprüche 1 bis 4, dadurch gekennzeichnet, daß mehrere, voneinander beabstandete Wärmeleitelemente (22a) um die Statorbohrung (16) herum angeordnet sind.

6. Außenläufermotor nach einem oder mehreren der Ansprüche 1 bis 5, dadurch gekennzeichnet, daß zwischen den Polspitzen zweier gegenüberliegender Statorbleche angeordnete Streubleche (100) als Wärmeleitelemente (22a) ausgebildet sind.

7. Außenläufermotor nach einem oder mehreren der Ansprüche 1 bis 6, gekennzeichnet durch mindestens einen vorzugsweise metallischen Wärmeleitsteg (18), der einendig an dem Motorflansch (17) angeordnet ist und anderendig an einem äußeren Randbereich (27) der dem Motorflansch (17) zugewandten freien Stirnseite (5) des Statorblechpaketes (4) anliegt.

8. Außenläufermotor nach Anspruch 7, dadurch gekennzeichnet, daß mehrere voneinander durch Lücken getrennte und um die Statorbohrung (16) herum angeordnete Wärmeleitstege (18) vorgesehen sind.

9. Außenläufermotor nach Anspruch 7 oder 8, dadurch gekennzeichnet, daß die Wärmeleitstege (18) einstückig mit dem Motorflansch (17) ausgebildet sind.

10. Außenläufermotor nach einem oder mehreren der Ansprüche 1 bis 9, dadurch gekennzeichnet, daß die isolierende Schicht (28) an das Statorblech (4) angespritzt ist.

11. Außenläufermotor nach einem oder mehreren der Ansprüche 1 bis 10, dadurch gekennzeichnet daß die Lagerelemente (12, 13, 14) an der isolierenden Schicht (28) im Klemmsitz und/oder durch Klebung gehalten sind.

12. Außenläufermotor nach Anspruch 11, dadurch gekennzeichnet, daß die isolierende Schicht (28) in ihren an den Stirnseiten (5, 6) des Statorblechpaketes (4) angeordneten Bereichen (30, 31) jeweils ein Lageraufnahmeteil (32, 33) für die Lagerelemente (12, 13) aufweist.

13. Außenläufermotor nach Anspruch 12, dadurch gekennzeichnet, daß die Lageraufnahmeteile (32, 33) als koaxial zur Drehachse (15) der Läuferwelle (11) angeordnete Ringkragen (34, 35) ausgebildet sind.

14. Außenläufermotor nach Anspruch 12 oder 13, dadurch gekennzeichnet, daß die Lagerelemente (12, 13) als beidseitig des Statorblechpaketes (4) angeordnete Kugellager (38, 39) ausgebildet sind, wobei die Außenringe (40, 41) der Kugellager (38, 39) innerhalb der entsprechenden Ringkragen (34, 35) angeordnet sind und die Innenringe (44, 45) der Kugellager (38, 39) entsprechende Abschnitte der Läuferwelle (11) kraft- oder formschlüssig umgreifen.

15. Außenläufermotor nach Anspruch 11, dadurch gekennzeichnet, daß das Lagerelement (14) als Gleitlager ausgebildet und zumindest teilweise innerhalb der mit der isolierenden Schicht (28) überzogenen Statorbohrung (16) des Statorblechpaketes (4) angeordnet ist.

16. Außenläufermotor nach Anspruch 15, dadurch gekennzeichnet, daß das Lagerelement (14) als eine durch das gesamte Statorblechpaket (4) hindurchreichende Lagerbuchse (46) ausgebildet ist und in ihren Endbereichen (47, 48) jeweils ein Gleitlager (50, 51) für die Läuferwelle (11) bildet.

17. Außenläufermotor nach einem oder mehreren der Ansprüche 1 bis 16, dadurch gekennzeichnet, daß zur Isolierung des Wickelkopfes der Statorwicklung auf jeder Seite des Stators (3) eine isolierende Abdeckkappe (70, 71) angeordnet ist, die eine radial verlaufende Wandung (72, 73) und eine axial verlaufende Ringwandung (74, 75) aufweist.

18. Außenläufermotor nach Anspruch 17, dadurch gekennzeichnet, daß die Abdeckkappe (70, 71) für ihre Befestigung im Übergang von der radial verlaufenden Wandung (72, 73) in die axial verlaufende Ringwandung (74, 75) von Öffnungen (76) durchsetzt wird, in die einstückig mit der isolierenden Schicht (28) ausgebildete, axial verlaufende Rastfinger (78) eingreifen.

19. Außenläufermotor nach einem oder mehreren der Ansprüche 1 bis 18, dadurch gekennzeichnet, daß das Wärmeleitelement (22a) von einer einen Wärmeübergang von dem Wärmeleitelement (22a) in das Innere des Außenläufermotors (1) verhindernden Wärmeisolierhülse (87a) umgeben ist.

20. Außenläufermotor nach Anspruch 19, dadurch gekennzeichnet, daß die Wärmeisolierhülse (87a) aus einem Wärmeisolierhülsenabschnitt (87) der isolierenden Schicht (28) und einem Wärmeisolierhülsenabschnitt (89) der Abdeckkappe (70) gebildet wird.

## Claims

1. An outer rotor-type motor (1), more particularly for driving fans, comprising an over-mounted rotor (2) and a stator (3) connected to an end plate (17) and comprising a winding and a laminated core (4), the stator laminated core (4) having at least one plastics insulating layer (28) which extends at least partly over the end faces (5, 6) of the stator laminated core (4), the rotor (2) being mounted on a shaft (11) rotatably mounted on bearing elements (12, 13, 14) and extending through an axial stator bore (16), the end of the shaft remote from the end plate (17) being non-rotably connected to the rotor (2), characterised in that the insulating layer (28) also extends over the inside of the stator bore (16), the bearing elements (12, 13, 14) are held against the insulating layer (28), and at least one metal heat-conducting element (22a) is provided and engages non-positively and/or positively at one end in the interior of the stator laminated core (4) whereas its other end is in heat-dissipating contact with the end plate (17), which is preferably of metal.

2. A motor according to claim 1, characterised in that the heat-conducting element (22a) is in the form of a threaded screw (22) or pin or rivet or the like.

3. A motor according to claim 2, characterised in that the threaded screw (22) extends through a hole (21) in the end plate (17) and its head (21) abuts the outside (23a) of the end plate (17) whereas its shank (92) is screwed into a threaded bore (23) in the stator laminated core (4).

4. A motor according to claim 2 or 3, characterised in that the threaded screw (22) has a countersunk head (25) disposed in a countersunk bore (24) in the end plate (17).

5. A motor according to one or more of claims 1 to 4, characterised in that a number of spaced-apart heat-conducting elements (22a) are disposed around the stator bore (16).

6. A motor according to one or more of claims 1 to 5, characterised in that dispersion plates (100) acting as heat-conducting elements (22a) are formed between the pole tips of two opposite stator plates.

7. A motor according to one or more of claims 1 to 6, characterised by at least one preferably metal heat-conducting web (18), one end of which is disposed adjacent the end plate (17) whereas the other end is adjacent an outer edge region (27) of the free end face (5) of the stator laminated core (4) facing the end plate (17).

8. A motor according to claim 7, characterised in that a number of heat-conducting webs (18) separated by gaps are disposed around the stator bore (16).

9. A motor according to claim 7 or 8, characterised in that the heat-conducting webs (18) are formed integrally with the end plate (17).

10. A motor according to one or more claims 1 to 9, characterised in that the insulating layer (28) is integrally moulded on the stator laminated core (4).

11. A motor according to one or more of claims 1 to 10, characterised in that the bearing elements (12, 13, 14) are held against the insulating layer (28) by a force-fit and/or adhesion.

12. A motor according to claim 11, characterised in that the areas (30, 31) of the insulating layer (28) disposed at the end faces (5, 6) of the stator laminated core (4) each have a part (32, 33) for receiving the bearing elements (12, 13).

13. A motor according to claim 12, characterised in that the bearing-receiving parts (32, 33) are constructed as annular collars (34, 35) coaxial with the axis of rotation (15) of the rotor shaft (11).

14. A motor according to claim 12 or 13, characterised in that the bearing elements (12, 13) are in the form of ball bearings (38, 39) disposed on both sides of the stator laminated core (4), the outer races (40, 41) of the ball bearings (38, 39) being disposed inside the corresponding annular collars (34, 35) and the inner races (34, 45) of the ball bearings (38, 39) non-positively or positively surrounding corresponding portions of the rotor shaft (11).

15. A motor according to claim 11, characterised in that the bearing element (14) is in the form of a sliding bearing and at least partly disposed inside the bore (16) of the laminated core (4), the bore being coated by the insulating layer (28).

16. A motor according to claim 15, characterised in that the bearing element (14) is in the form of a bearing bush (46) extending through the entire stator laminated core (4) and each end region (47, 48) thereof forms a sliding bearing (50, 51) for the rotor shaft (11).

17. A motor according to one or more of claims 1 to 16, characterised in that an insulating cap (70, 71) is disposed on each side of the stator (3) for insulating the head of the stator winding and has a radial wall (72, 73) and an axial annular wall (74, 75).

18. A motor according to claim 17, characterised in that the cap (70, 71) for securing it, in the transition region from the radial wall (72, 73) to the axial annular wall (74, 75), is formed with apertures (76) for engaging axial locking fingers (78) formed integrally with the insulating layer (28).

19. A motor according to one or more of claims 1 to 18, characterised in that the heat-conducting element (22a) is surrounded by a heat-insulating sleeve (87a) preventing transfer of heat from the heat-conducting element (22a) to the interior of the outer rotor-type motor (1).

20. A motor according to claim 19, characterised in that the heat-insulating sleeve (87a) comprises a portion (87) of the insulating layer (28) and a portion (89) of the cap (70).

**Revendications**

1. Moteur à rotor extérieur (1) en particulier pour l'entraînement de ventilateurs, muni d'un rotor (2) logé de façon mobile et d'un stator (3) relié au flasque du moteur et comprenant un bobinage et un empilage de tôles (4), cet empilage de tôles (4) du stator étant revêtu d'au moins une couche isolante (28) en matière synthétique, s'étendant au moins sur des régions des faces antérieures (5, 6) de l'empilage des tôles (4) du stator, le rotor (2) étant logé, au moyen dun axe (11) monté rotatif au moyen d'éléments de palier (12, 13, 14) et traversant un alésage statorique axial (8, 16), l'extrémité opposée au moteur de cet axe (11) étant reliée en rotation au rotor (2), caractérisé en ce que la couche isolante (28) s'étend aussi sur la face intérieure de l'alésage statorique (16), que les éléments de palier (12, 13, 14) sont fixés sur ladite couche isolante (28) et qu'il est prévu au moins un élément métallique (22a) conducteur de chaleur dont une extrémité s'engage de force et/ou mécaniquement à l'intérieur de l'empilage de tôles (4) du stator et dont l'autre extrémité est, de préférence, en contact avec le flasque métallique (17) du moteur afin de lui transmettre la chaleur.

2. Moteur à rotor extérieur selon la revendication 1, caractérisé en ce que l'élément conducteur de chaleur (22a) a la forme d'une vis filetée (22), d'une cheville ou d'un rivet, etc.

3. Moteur à rotor extérieur selon la revendication 2, caractérisé en ce que la vis filetée (22) traverse un trou (21) de la flasque (17) du moteur, sa tête (91) étant appliquée contre la face extérieure (23a) de la flasque (17) et la tige (92) étant vissée dans un alésage à filet intérieur (23) de l'empilage de tôles (4) du stator.

4. Moteur à rotor extérieur selon la revendication 2 ou 3, caractérisé en ce que la vis filetée (22) possède une tête fraisée réduite (25) disposée dans un alésage fraisé (24) du flasque (17) du moteur.

5. Moteur à rotor extérieur selon l'une ou plusieurs des revendications 1 à 4, caractérisé en ce que plusieurs éléments (22a) conducteurs de chaleur sont disposés avec un certain écart les uns des autres, autour de l'alésage statorique (16).

6. Moteur à rotor extérieur selon l'une ou plusieurs des revendications 1 à 5, caractérisé en ce que, entre les pointes polarisés de deux tôles en regard du stator, des tôles de dispersion (100) sont disposées en tant qu'éléments conducteurs de chaleur (22a).

7. Moteur à rotor extérieur selon l'une ou plusieurs des revendications 1 à 6, caractérisé par au moins une barrette conductrice de chaleur (18), de préférence métallique, dont une extrémité est disposée sur la flasque (17) du moteur et dont l'autre extrémité est appliquée sur une région extérieure de la périphérie (27) de la face antérieure libre (5) de l'empilage de tôles (4) tournée vers le flasque (7) du moteur.

8. Moteur à rotor extérieur selon la revendication 7,

caractérisé en ce qu'il est prévu plusieurs barrettes (18) conductrices de chaleur séparées par des intervalles et disposées autour de l'alésage statorique (16).

9. Moteur à rotor extérieur selon la revendication 7 ou 8,

caractérisé en ce que les barrettes conductrices (18) de chaleur sont venues d'une pièce avec le flasque (17) du moteur.

10. Moteur à rotor extérieur selon l'une ou plusieurs des revendications 1 à 9,

caractérisé en ce que la couche isolante (28) est appliquée par projection sur la tôle (4) du stator.

11. Moteur à rotor extérieur selon l'une ou plusieurs des revendications 1 à 10,

caractérisé en ce que les éléments du palier (12, 13, 14) sont maintenus sur la couche isolante (28) par serrage et/ou collage.

12. Moteur à rotor extérieur selon la revendication 11,

caractérisé en ce que la couche isolante (28) présente, dans ses régions (30, 31) situées sur les faces antérieures (5, 6) de l'empilage de tôles (4) respectivement une partie (32, 33) pour recevoir les éléments de palier (12, 13).

13. Moteur à rotor extérieur selon la revendication 12,

caractérisé en ce que les parties (32, 33) du palier ont la forme de collets annulaires (34, 35) disposés coaxialement à l'axe de rotation (15) de l'arbre (11) du rotor.

14. Moteur à rotor extérieur selon la revendication 12 ou 13,

caractérisé en ce que les éléments (12, 13) du palier ont la forme de roulements à billes (38, 39) disposés de part et d'autre de l'empilage de tôles (4) du stator, les anneaux extérieurs (40, 41) des roulements à billes (38, 39) étant placés à l'intérieur des collets annulaires respectifs (34, 35) et les anneaux intérieurs (44, 45) des roulements à billes (38, 39) entourant de force ou mécaniquement des portions correspondantes de l'arbre (11) du rotor.

15. Moteur à rotor extérieur selon la revendication 11,

caractérisé en ce que l'élément de palier (14) a la forme d'un coussinet lisse et est au moins partiellement disposé à l'intérieur de l'alésage (16) revêtu de la couche isolante (28) de l'empilage de tôles (4) du stator.

16. Moteur à rotor extérieur selon la revendication 15,

caractérisé en ce que l'élément de palier (14) a la forme d'une douille traversant la totalité de l'empilage de tôles (4) et dont les régions terminales (47, 48) constituent respectivement un coussinet lisse pour larbre (11) du rotor.

17. Moteur a rotor extérieur selon l'une ou plusieurs des revendications 1 à 16,

caractérisé en ce que, pour isoler la tête du bobinage statorique, un capot isolant de protection (70, 71) est disposé de chaque côté du stator (3), muni d'une paroi (72, 73) s'étendant radialement et d'une paroi annulaire (74, 75) s'étendant axialement.

18. Moteur à rotor extérieur selon la revendication 17,

caractérisé en ce que sur le capot de protection (70, 71), il est prévu des ouvertures (76) pour sa fixation dans la région de transition de la paroi radiale (72, 73) vers la paroi annulaire axiale (74, 75), des doigts d'arrêt (78) venus d'une pièce avec la couche isolante (28) et s'étendant dans la direction axiale s'engageant dans lesdites ouvertures.

19. Moteur à rotor extérieur selon l'une ou plusieurs des revendications 1 à 18,

caractérisé en ce que l'élément conducteur de chaleur (22a) est entouré d'une enveloppe d'isolation thermique (87a) empêchant le transfert thermique de l'élément conducteur de chaleur (22a) vers l'intérieur du moteur (1) à rotor extérieur.

20. Moteur à rotor extérieur selon la revendication 19,

caractérisé en ce que l'enveloppe d'isolation thermique (87a) est constituée par une portion (87) de la couche isolante (28) et une portion (89) du capot de protection (70).

Fig. 1

Fig. 2

3